# EUROPÄISCHE PATENTSCHRIFT

(11) **EP 3 322 632 B1**
(45) Veröffentlichungstag und Bekanntmachung des Hinweises auf die Patenterteilung: **23.10.2019**
(21) Anmeldenummer: 16735661.7
(22) Anmeldetag: 06.07.2016
(51) Int. Cl.: B62D 5/00, B62D 5/04

(54) **FEEDBACK-AKTUATOR FÜR EINE LENKEINRICHTUNG**
FEEDBACK ACTUATOR FOR A STEERING DEVICE
ACTIONNEUR À RÉTROACTION POUR UN DISPOSITIF DE DIRECTION

(30) Priorität: 15.07.2015 DE 102015213303
(43) Veröffentlichungstag der Anmeldung: 23.05.2018
(73) Patentinhaber: ThyssenKrupp Presta AG, 9492 Eschen (LI); thyssenkrupp AG, 45143 Essen (DE)
(72) Erfinder: KREUTZ, Daniel, 6800 Feldkirch (AT)
(74) Vertreter: thyssenkrupp Intellectual Property GmbH
(86) Internationale Anmeldenummer: PCT/EP2016/065931
(87) Internationale Veröffentlichungsnummer: WO 2017/009125

(56) Entgegenhaltungen:
- WO-A1-2009/063818
- WO-A1-2012/017886
- DE-A1- 19 914 383
- JP-A- 2007 245 819

## Beschreibung

### Stand der Technik

Die Erfindung betrifft einen Feedback-Aktuator für eine Lenkeinrichtung, umfassend eine Lenkwelle, die um ihre Längsachse drehbar in einer Manteleinheit gelagert ist, die ein Mantelrohr aufweist und die an einem Fahrzeug anbringbar ist, und der eine Aktuatoreinheit mit einem Elektromotor umfasst, der einen mit der Manteleinheit verbundenen Stator und eine drehend antreibbare Rotorwelle aufweist, die drehmomentschlüssig mit der Lenkwelle verbunden ist, wobei der Elektromotor innerhalb der Manteleinheit angeordnet ist, wobei die Rotorwelle mit einer Eingangswelle eines Getriebes verbunden ist, das eine mit der Lenkwelle verbundene Ausgangswelle aufweist und welches innerhalb der Manteleinheit angeordnet ist.

Steer-by-wire-Lenksysteme für Kraftfahrzeuge nehmen manuelle Lenkbefehle des Fahrers wie konventionelle mechanische Lenkungen durch Drehung eines Lenkrades einer Eingabeeinheit entgegen. Dadurch wird die Drehung einer Lenkwelle bewirkt, die jedoch nicht mechanisch über das Lenkgetriebe mit den zu lenkenden Rädern verbunden ist, sondern mit Drehwinkel- bzw. Drehmomentsensoren zusammenwirkt, die den eingebrachten Lenkbefehl erfassen und ein daraus bestimmtes elektrisches Steuersignal an einen Lenksteller abgeben, der mittels eines elektrischen Stellantriebs einen entsprechenden Lenkeinschlag der Räder einstellt.

Bei steer-by-wire-Systemen erhält der Fahrer von den gelenkten Rädern keine unmittelbare physische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände zum Lenkrad zurückgemeldet werden. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator ist in die Eingabeeinheit integriert und weist eine Aktuatoreinheit auf, die einen als Handmoment- oder Lenkradsteller dienenden Stellantrieb umfasst, und die abhängig vom Rückkopplungs-Signal ein dem realen Reaktionsmoment entsprechendes Rückstellmoment (Feedbackmoment) über die Lenkwelle in das Lenkrad einkoppelt. Derartige "Force-feedback"-Systeme geben dem Fahrer den Eindruck einer realen Fahrsituation wie bei einer konventionellen Lenkung, was eine intuitive Reaktion erleichtert.

Aus der DE 10 2008 036 730 A1 ist ein steer-by-wire-Lenksystem bekannt, mit einer Eingabeeinheit, die eine von einem Elektromotor angetriebene Aktuatoreinheit aufweist. Der Elektromotor kann von einer elektronischen Steuereinheit angesteuert werden, die in Abhängigkeit von Messwerten, welche die jeweilige Fahrsituation charakterisieren, den Motorstrom einstellt. Die Motorwelle ist direkt mit der Lenkwelle gekuppelt, somit ist das Motordrehmoment identisch mit dem in die Lenkwelle eingekoppelten Handmoment. Dabei ist der Elektromotor bezüglich der Längsachse axial an die Manteleinheit angeflanscht und die Motorwelle über eine Kupplung mit der in der Manteleinheit gelagerten Lenkwelle verbunden. Eine gleichartig aufgebaute Aktuatoreinheit ist in der EP 2 414 211 B1 dargestellt. In der darin beschriebenen Ausführung bildet die Lenkwelle selbst die Motorwelle des Elektromotors, so dass ein kompakterer Aufbau realisiert werden kann.

Zur Erzeugung eines definierten Rückstellmoments im Lenkrad muss bei den vorangehend beschriebenen bekannten Ausführungen das Motordrehmoment wegen der direkten Kupplung der Motorwelle mit der Lenkwelle entsprechend genau vorgegeben werden, was eine aufwendige, schnelle und präzise Regelung des Motorstroms in der Steuereinheit erfordert. Hinzu kommt, dass zur Realisierung größerer Rückstellmomente relativ hohe Steuerströme bereitgestellt werden müssen. Diese Anforderungen bedingen einen hohen Steuerungsaufwand, so dass die Steuereinheit entsprechend aufwendig ausgelegt werden muss. Außerdem haben zur Erzeugung realistischer Rückstellmomente geeignete Elektromotoren mit ausreichend hohen Motordrehmomenten relativ große Abmessungen, was einem kompakten Aufbau entgegensteht.

Aus der WO 2012/017886 A1, die die Präambel des Anspruchs 1 zeigt, ist es bekannt, die Rotorwelle des Motors mit einer Eingangswelle eines Getriebes zu verbinden, das eine mit der Lenkwelle verbundene Ausgangswelle aufweist. Das Getriebe ist in einem Gehäuse angeordnet, welches an dem Mantelrohr der Manteleinheit befestigt ist. Nachteilig daran ist der relativ große erforderliche Bauraum.

Angesichts der vorangehend erläuterten Problematik ist es eine Aufgabe der vorliegenden Erfindung, einen verbesserten Feedback-Aktuator für eine Lenkeinrichtung zur Verfügung zu stellen, der bei einem kompakten Aufbau und mit geringerem Steuerungsaufwand eine genauere Drehmomenteinleitung des Rückstellmoments in die Lenkwelle ermöglicht.

### Darstellung der Erfindung

Zur Lösung der vorgenannten Problematik wird erfindungsgemäß vorgeschlagen, dass das Mantelrohr einen gegebenen Innenquerschnitt aufweist, und das Getriebe und der Elektromotor einen Außenquerschnitt haben, mit dem sie in Längsrichtung in den Innenquerschnitt des Mantelrohrs einsetzbar sind

Dadurch, dass das Getriebe erfindungsgemäß in dem Mantelrohr integriert, d.h. vollständig innerhalb des Mantelrohrs untergebracht ist, ergibt sich zusammen mit einem relativ klein dimensionierten Elektromotor eine kompakte und leichte Bauweise.

In einem erfindungsgemäßen Lenksystem ist die Rotorwelle nicht wie im bekannten Stand der Technik direkt, sondern über ein Getriebe mit einem vorgegebenen Übersetzungsverhältnis an die Lenkwelle gekuppelt. Durch die Übersetzung wird eine höhere Drehzahl der mit der Eingangswelle verbundenen Motorwelle in eine niedrigere Drehzahl der Ausgangswelle und damit der Lenkwelle umgesetzt. Im dazu umgekehrten Verhältnis wird an der Ausgangswelle ein Rückstellmoment in die Lenkwelle eingeleitet, welches höher ist als das vom Elektromotor in die Eingangswelle abgegebene Motordrehmoment.

Vorteilhaft bei der Erfindung ist, dass ein Elektromotor mit höherer Drehzahl, dabei aber kleinerem Motordrehmoment als im Stand der Technik eingesetzt werden kann. Derartige Elektromotoren können zum einen eine kleinere Baugröße haben, was einem kompakten Aufbau eines Feedback-Aktuators entgegenkommt. Zum anderen kann die Lenkwelle durch die Übersetzung von dem Elektromotor präziser bewegt werden, wenn beispielsweise mehrere Umdrehungen der Motorwelle in den Bruchteil einer Umdrehung der Lenkwelle umgesetzt werden. Wird das Übersetzungsverhältnis hinreichend hoch gewählt, haben durch Regelverzögerungen oder durch äußere Umstände verursachte Abweichungen der Motorwellen-Drehbewegung, die in der Praxis unterhalb einer Umdrehung der Motorwelle liegen, für einen Fahrer praktisch keinen haptisch merklichen Einfluss auf das am Lenkrad anliegende Reaktionsmoment.

Ein weiterer Vorteil ist, dass ein für die erfindungsgemäße Anordnung geeigneter Elektromotor mit einem kleineren Motorstrom betrieben werden kann, als die im Stand der Technik erforderlichen Motoren mit hohem Motormoment. Dadurch braucht die Steuereinheit zur Ansteuerung des Elektromotors für eine geringere Strombelastung ausgelegt werden und kann entsprechend einfacher und kostengünstiger hergestellt werden.

Das Getriebe kann ein Übersetzungsverhältnis (Verhältnis der Motordrehzahl zur Drehzahl der Lenkwelle) im Bereich von 3:1 bis 25:1 haben, bevorzugt im Bereich von 5:1 bis 15:1. Bei der Erfindung wird die Motordrehzahl um das Übersetzungsverhältnis bevorzugt in dem angegebenen Bereich herabgesetzt an die Lenkwelle abgegeben, wodurch zur Darstellung eines realistischen, ausreichend großen Reaktionsmoments in der Lenkwelle ein relativ kompakter Elektromotor eingesetzt werden kann. Zugleich ist eine hinreichend schnelle Bewegung der Lenkwelle gewährleistet, die bei noch höheren Übersetzungsverhältnissen langsamer erfolgen würde.

Dadurch, dass die Eingangswelle und/oder die Ausgangswelle koaxial zur Längsachse angeordnet ist, d.h. eine gemeinsame Längsachse haben, kann der in der Lenksäule zur Verfügung stehende Bauraum für die Auslegung des Getriebes und des Elektromotors optimal ausgenutzt werden. Der Elektromotor kann mit seiner Motorwelle koaxial zur Längsachse angeordnet werden, und das Getriebe axial am Motorgehäuse des Elektromotors angeflanscht werden, oder in Form eines sogenannten Getriebemotors in das Motorgehäuse integriert werden. Dadurch ist ein besonders einfacher Aufbau mit geringen Abmessungen realisierbar, wobei die Drehmomenteinleitung in die Lenkwelle verbessert wird.

Eine vorteilhafte Ausführung sieht vor, dass das Getriebe als Planetengetriebe ausgebildet ist. Dabei kann bevorzugt die Eingangswelle mit dem Sonnenrad des Planetengetriebes verbunden sein, und die Ausgangswelle mit dem Hohlrad oder dem Planetenträger des Planetengetriebes verbunden sein. Planetengetriebe ermöglichen bei kleiner Bauform die zuverlässige Übertragung höherer Drehmomente bei hohem Wirkungsgrad und die Realisierung des geforderten Übersetzungsverhältnisses in einer Getriebestufe. Außerdem sind bei einem Planetengetriebe bauartbedingt die Eingangs- und Ausgangswelle koaxial ausgerichtet. Dadurch ist es beispielsweise möglich, das Getriebe axial an einem Elektromotor zu montieren, und die Motorwelle koaxial an die Eingangswelle anzukuppeln, oder das Sonnenrad unmittelbar auf der Motorwelle anzubringen, so dass diese die Eingangswelle bildet. Dadurch kann das Getriebe bzw. eine Motor-Getriebe-Einheit mit geringen Abmessungen kompakt gestaltet werden. Durch die koaxiale Bauform kann die Lenkwelle ebenfalls direkt an die GetriebeAusgangswelle gekuppelt werden, beispielsweise indem der Planetenträger auf der Lenkwelle angebracht wird. In einer bevorzugten Weiterbildung ist der Planetenträger und die Lenkwelle ein einstückiges, integrales Bauteil. In dieser bevorzugten Bauform ist das Hohlrad feststehend mit dem Mantelgehäuse verbunden.

Alternativ ist es insbesondere zur Realisierung eines höheren Übersetzungsverhältnisses zwischen Motor- und Lenkwelle denkbar, dass das Getriebe als Wellgetriebe oder Zykloidgetriebe ausgebildet ist. Wellgetriebe, auch als Gleitkeilgetriebe oder harmonic drive ® bezeichnet, und Zykloid- bzw. Exzentergetriebe haben ebenfalls koaxiale Ein und Ausgangswellen, die erfindungsgemäß in einer Manteleinheit in Richtung der Längsachse angeordnet werden können. Wellgetriebe haben eine geringe Anzahl beweglicher Komponenten, sind leicht, kompakt und praktisch wartungsfrei und ermöglichen eine spielfreie Drehmoment-übertragung bei hoher Positioniergenauigkeit. Zykloid- oder Exzentergetriebe ermöglichen ebenfalls eine präzise und zuverlässige Drehmomentübertragung mit den geforderten Übersetzungsverhältnissen.

Eine vorteilhafte Ausführungsform der Erfindung sieht vor, dass die Manteleinheit ein inneres Mantelrohr aufweist, in dem der Elektromotor und das Getriebe angeordnet sind, und welches in einer Halteeinheit in Richtung der Längsachse teleskopierend verstellbar ist. Die Halteeinheit ist an einer Kraftfahrzeugkarosserie anbringbar und trägt die Manteleinheit. Die Manteleinheit umfasst einen Führungskasten, auch als äußeres Mantelrohr oder äußere Manteleinheit bezeichnet, der in Richtung der Längsachse relativ zur Halteeinheit fixiert ist. Dadurch, dass das innere Mantelrohr relativ zu dem Führungskasten in Richtung der Längsachse verstellbar ist, wird eine Längsverstellung ermöglicht, wodurch die Position des Lenkrads, welches am hinteren Ende der in dem inneren Mantelrohr gelagerten Lenkwelle angebracht ist, in Längsrichtung relativ zur Fahrerposition eingestellt werden kann. Die Längsverstellung dient zum einen dazu, das Lenkrad in eine für einen Fahrer ergonomisch günstige Bedienposition bringen zu können. Zum anderen kann das Lenkrad beim autonomen Fahren, wenn während der Fahrt kein manueller Lenkeingriff erforderlich ist, aus dem Bedienbereich herausbewegt und verstaut werden. Hierzu wird angestrebt, dass die innere Manteleinheit möglichst tief in Längsrichtung in den Führungskasten hineingeschoben werden kann. Zur Realisierung eines hinreichend langen Verstellwegs in Längsrichtung ist der erfindungsgemäße Feedback-Aktuator aufgrund seiner kompakten Bauweise zur Integration in das innere Mantelrohr besonders gut geeignet.

Der Führungskasten kann beispielsweise ein äußeres Mantelrohr umfassen, dessen offener Innenquerschnitt dem Außenquerschnitt des inneren Mantelrohrs entspricht. Das innere Mantelrohr kann zur Bildung einer teleskopierbaren Längsführung in Längsrichtung in das äußere Mantelrohr eingeschoben werden. Durch die erfindungsgemäße Integration des Feedback-Aktuators in den Innenraum des inneren Mantelrohrs kann mit geringem Aufwand eine Anpassung einer Lenksäule an einen jeweils geforderten Verstellweg einfach durch Bereitstellung von innerem und äußerem Mantelrohr in unterschiedlichen Baulängen erfolgen. Eine derartige baukastenartige Bauweise ermöglicht eine modulare Anpassung an unterschiedliche Fahrzeugtypen, was im Hinblick auf eine rationelle Fertigung besonders vorteilhaft ist.

Es ist weiterhin möglich, dass die Manteleinheit in einer Halteeinheit gehaltert ist, die an einem Kraftfahrzeug anbringbar ist, wobei die Manteleinheit relativ zur Halteeinheit quer zur Längsachse verstellbar ist. Eine Verstellbarkeit in Querrichtung kann beispielsweise realisiert werden, indem die Manteleinheit einen Führungskasten aufweist, der um eine quer zur Längsachse liegende Schwenkachse verschwenkbar an der Fahrzeugkarosserie gelagert ist. Damit ist eine Höhenverstellung des Lenkrads relativ zur Bedienposition des Fahrers realisierbar. Wie vorangehend bereits für die Längsverstellung erläutert, dient dies einer ergonomischen Anpassung der Bedienposition, und kann darüber hinaus genutzt werden, um die Lenksäule zur Freigabe des Fahrzeuginnenraums zu verstauen. Der relativ kleine erforderliche Bauraum des erfindungsgemäßen Feedback-Aktuators innerhalb des inneren Mantelrohrs kommt einem großen Verstellbereich der Höhenverstellung ebenfalls zugute.

Bevorzugt wird durch eine entsprechende Ausgestaltung der Halteeinheit eine Längs- und Höhenverstellung kombiniert. Damit wird eine optimierte ergonomische Anpassung der Bedienposition bei gleichzeitig verbesserter Verstaubarkeit der Lenksäule ermöglicht.

Es ist grundsätzlich denkbar und möglich, dass die Längs- und/oder Höhenverstellung manuell erfolgen kann. Hierzu kann an der Halteeinheit eine manuell betätigbare Spannvorrichtung vorgesehen sein, die von Hand aus einer geöffneten Löseposition in eine geschlossene Feststellposition gebracht werden kann. In Löseposition sind die in Längs- und/oder Querrichtung relativ zueinander positionierbaren Teile von Halte- und Manteleinheit frei beweglich, so dass das Lenkrad manuell in gewünschte Höhen- und/oder Längsposition gebracht werden kann. In Feststellposition der Spannvorrichtung sind besagte Teile von Halte- und Manteleinheit kraft- und/oder formschlüssig miteinander verbunden, so dass das Lenkrad in der eingestellten Position fixiert ist. Bevorzugt umfasst die Spannvorrichtung zwei Nockenscheiben, die zueinander verdrehbar sind und dadurch einen Klemmhub realisieren.

Es ist weiterhin denkbar und möglich, zur Längs- und/oder Höhenverstellung motorische Stellantriebe vorzusehen. Ein Stellantrieb umfasst beispielsweise einen Elektromotor, der einen Spindeltrieb antreibt, umfassend eine Spindel und eine darauf angeordnete Spindelmutter. Der Elektromotor stützt sich an einem feststehenden Teil ab, beispielsweise an einem Führungskasten, und treibt die Spindel an. Die Spindelmutter ist mit einem relativ zum feststehenden Teil zu bewegenden Teil verbunden, beispielsweise einem relativ zum besagten Führungskasten in Längsrichtung teleskopierend verschiebbaren inneren Mantelrohr. Wird die Spindel von dem Elektromotor in Drehung versetzt, werden das feststehende und das bewegliche Teil, im Beispiel der Führungskasten und das innere Mantelrohr, relativ zueinander positioniert. Auf diese Weise kann die Längs- und Höhenverstellung des Lenksäule realisiert werden, wobei der Stellantrieb alternativ eine angetriebene Spindelmutter und eine feststehende Spindel aufweisen kann, oder alternative Bauformen von Hub- oder Schwenkantrieben, welche für eine Bewegung des Feedback-Aktuators relativ zur Fahrzeug-Karosserie geeignet sind.

Der erfindungsgemäße Feedback-Aktuator ist zum Einsatz in steer-by-wire-Lenksystemen mit elektrischen Stellantrieben zur Längs- und/oder Höhenverstellung besonders gut geeignet. Die kleine Bauform ermöglicht nämlich durch die Integration in die Manteleinheit - insbesondere in das innere Mantelrohr - eine relativ große Designfreiheit bei der Konstruktion der Lenksäule. Zum anderen hat der Feedback-Aktuator eine relativ geringe Masse, so dass einfache, leichte und kostengünstige Stellantriebe eingesetzt werden können.

Eine Ausführung der Erfindung sieht vor, dass die Manteleinheit ein Mantelrohr mit einem gegebenen Innenquerschnitt aufweist, und das Getriebe und der Elektromotor einen hinsichtlich Form und Abmessungen daran angepassten Außenquerschnitt haben, mit dem sie in Längsrichtung in den Innenquerschnitt des Mantelrohrs einsetzbar sind. Das Mantelrohr kann beispielsweise das innere Mantelrohr bilden und beispielsweise einen kreisrunden Innenquerschnitt haben mit einem gegebenen Innendurchmesser. Entsprechend können das Getriebe, der Elektromotor oder eine aus miteinander verbundenem Getriebe und Elektromotor gebildete Getriebemotor-Einheit einen Außenquerschnitt mit einem Außendurchmesser haben, so dass sie wie eine Kolbeneinheit oder eine Kartusche in Längsrichtung in das Mantelrohr eingeschoben und fixiert werden können. Die Fixierung in Längsrichtung und gegen Verdrehung relativ zum Mantelrohr kann beispielsweise durch von außen radial eingebrachte Befestigungselemente erfolgen. Alternativ können das Mantelrohr, das Getriebe und der Elektromotor unrunde Querschnitte mit korrespondierenden Formschlusselementen aufweisen, so dass sie gegen relative Verdrehung gegeneinander gesichert sind, und lediglich in Längsrichtung in dem Mantelrohr fixiert werden müssen. Ein besonderer Vorteil des in Längsrichtung in das Mantelrohr einbringbaren Elektromotors und Getriebes ist der modulare Aufbau. Für einen gegebenen Querschnitt kann nämlich ein erfindungsgemäßes Getriebe bzw. ein Elektromotor für unterschiedliche Lenksäulen eingesetzt werden, die sich beispielsweise durch die Länge des Mantelrohrs unterscheiden. Darüber hinaus ist es denkbar und möglich, unterschiedliche Elektromotoren und unterschiedliche Getriebe mit identischen Au-ßenquerschnitten bereitzustellen, die für unterschiedliche Anwendungsfälle erfindungsgemäß in einem Mantelrohr miteinander kombiniert werden können. Auf diese Weise lässt sich ein Baukastensystem realisieren, welches eine flexible und rationelle Fertigung ermöglicht.

Der Elektromotor ist bevorzugt als bürstenloser Gleichstrommotor ausgebildet. Mittels derartiger elektronisch kommutierter Gleichstrommotoren (englisch: brushless DC motor (BLDC)) lassen sich durch eine geeignete Steuerung die geforderten Motordrehmomente mit hinreichender Genauigkeit mit relativ geringem Steuerungsaufwand erzeugen, wobei erfindungsgemäß relativ klein dimensionierte, leichte Motoren einsetzbar sind.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines steer-by-wire-Lenksystems,
- Figur 2: eine Eingabeeinheit eines Lenksystems gemäß Figur 1 in einer ersten Ausführungsform,
- Figur 3: eine Eingabeeinheit eines Lenksystems gemäß Figur 1 in einer zweiten Ausführungsform,
- Figur 4: einen Längsschnitt entlang der Längsachse durch eine erfindungsgemäße Eingabeeinheit,
- Figur 5: eine vergrößerte Detaildarstellung der Ansicht aus Figur 4,
- Figur 6: eine Querschnittansicht S der Eingabeeinheit gemäß Figur 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

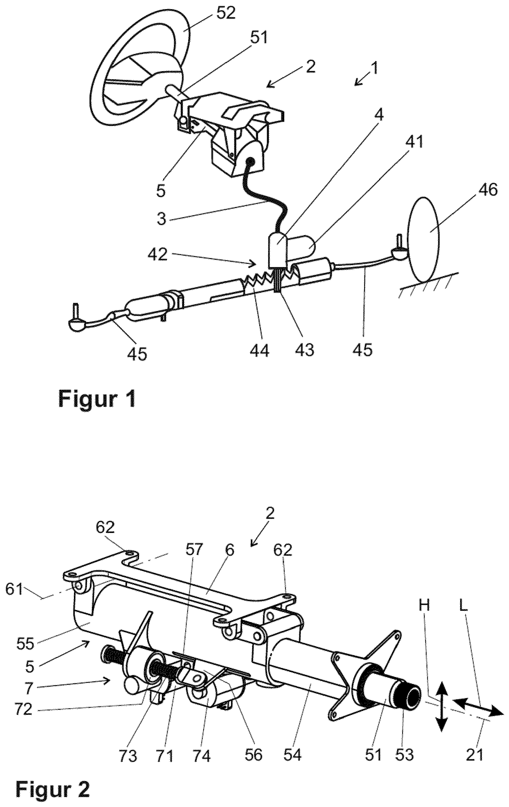

Figur 1 zeigt schematisch ein steer-by-wire-Lenksystem 1, welches eine Eingabeeinheit 2 umfasst, die über eine elektrische Leitung 3 mit einem elektrischen Lenkungsantrieb 4 verbunden ist. Der Lenkungsantrieb 4 umfasst einen mit der elektrischen Leitung 3 verbundenen elektrischen Stellmotor 41, der ein Lenkungs-Stellmoment in ein Lenkgetriebe 42 einleitet. Dort wird das Lenkungs-Stellmoment über ein Ritzel 43 und eine Zahnstange 44 in eine Translationsbewegung von Spurstangen 45 umgesetzt, wodurch ein Lenkeinschlag der gelenkten Räder 46 bewirkt wird.

Die Eingabeeinheit 2 weist einen Feedback-Aktuator 5 auf mit einer Lenkwelle 51, an deren bezogen auf die Fahrtrichtung hinteren Ende ein Lenkrad 52 angebracht ist.

Figur 2 zeigt einen Feedback-Aktuator 5 in einer ersten Ausführungsform. Darin ist die Lenkwelle 51 um die Längsachse 21 drehbar in einem Mantelrohr 54 gelagert. Der Endabschnitt 53 der Lenkwelle 51 ist ausgebildet zur Anbringung eines Lenkrads 52, welches in dieser Darstellung weggelassen ist.

Das Mantelrohr 54 ist in einem Führungskasten 55 aufgenommen, der auch als äußeres Mantelrohr oder Kastenschwinge bezeichnet werden kann und zusammen mit dem Mantelrohr 54 eine Manteleinheit bildet. Der Außenquerschnitt des Mantelrohrs 54 und der Innenquerschnitt des Führungskastens 55 sind hinsichtlich Form und Abmessungen so aufeinander abgestimmt, dass das Mantelrohr 54 in Richtung der Längsachse 21 in dem Führungskasten 55 wie mit dem Doppelpfeil angedeutet in Längsrichtung L vor und zurück verschiebbar ist, um eine Längsverstellung des Lenkrads 52 zu ermöglichen.

Der Führungskasten 55 ist an einer Halteeinheit 6 um eine Schwenkachse 61 schwenkbar gelagert. Die Halteeinheit 6 umfasst Befestigungsmittel 62, welche die Anbringung der Eingabeeinheit 2 an einer hier nicht dargestellten Kraftfahrzeug-Karosserie ermöglichen. Dadurch, dass der Führungskasten 55 um die Schwenkachse 61 verschwenkt wird, kann ein im Endbereich 53 angebrachtes Lenkrad 52 relativ zur Karosserie in Höhenrichtung H verstellt werden, was mit dem Doppelpfeil H angedeutet ist.

Zur Längsverstellung ist in Figur 2 ein motorischer Stellantrieb 7 vorgesehen, umfassend einen elektrischen Stellmotor 71, von dem eine am Führungskasten 55 drehbar gelagerte, in Längsrichtung L abgestützte Spindelmutter 72 um eine zur Längsachse 21 parallele Drehachse drehend antreibbar ist. Die Spindelmutter 72 bildet zusammen mit einer Spindel 73, auf die sie aufgeschraubt ist, einen Spindeltrieb. Die Spindel 73 ist drehfest mit einem Widerlager 56 verbunden, welches am Mantelrohr 54 angebracht ist. Das Widerlager 56 erstreckt sich in radialer Richtung durch ein Langloch 57 in dem Führungskasten 55 hindurch, das sich parallel zur Längsachse 21 erstreckt und in dem das Widerlager 56 in Längsrichtung beweglich aufgenommen ist. In Umfangsrichtung ist das Widerlager 56 in dem Langloch 57 abgestützt, so dass das Mantelrohr 54 gegen Drehung relativ zum Führungskasten 55 gesichert ist.

Durch Antrieb des Stellmotors 71 wird die Spindelmutter 72 in Drehung versetzt, wodurch die Spindel 73 je nach Drehrichtung in oder entgegen der Längsrichtung L verfahren wird, und entsprechend das damit verbundene Mantelrohr 54 relativ zum Führungskasten 55 in Längsrichtung ein- oder ausgefahren wird. Diese Längsverstellung dient zur Anpassung der Position des Lenkrads 52 relativ zur Fahrerposition, oder auch zur Verstauung des Lenkrads 52, indem das Mantelrohr 54 so weit wie möglich in den Führungskasten 55 eingefahren wird.

Über einen im Prinzip gleichartig aufgebauten Spindelantrieb mit einem Stellmotor 74 wird eine im Detail nicht dargestellte Höhenverstellung ermöglicht. Dabei ist ein zwischen dem Führungskasten 55 und der Halteeinheit 6 jeweils über Gelenke angebrachter Hebel mittels des Stellmotors 74 verschwenkbar angeordnet, so dass der Führungskasten 55 um die Schwenkachse 61 zur Höhenverstellung eines Lenkrads 52 auf und ab verstellbar ist.

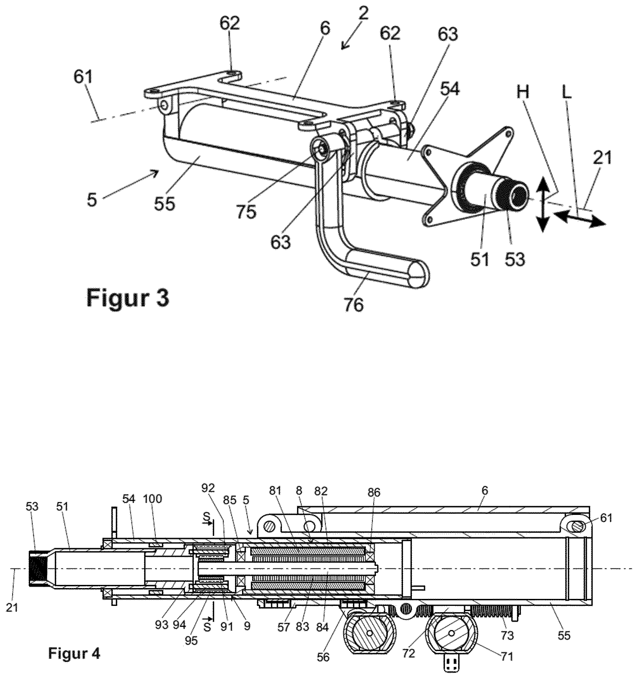

Figur 3 zeigt eine ebenfalls in Längsrichtung L und Höhenrichtung H verstellbaren Feedback-Aktuator 5, der allerdings manuell verstellbar ist. Im Einzelnen sind keine motorischen Stellantriebe vorhanden, sondern eine Spanneinrichtung 75, welche eine Freigabestellung hat, in der das Mantelrohr 54, der Führungskasten 55 und die Halteeinheit 6 wie zu Figur 2 beschrieben relativ zueinander verstellbar sind. Durch manuelle Betätigung eines Spannhebels 76 kann die Spanneinrichtung 75 in eine Feststellposition gebracht werden, indem zwei quer zur Längsachse 21 gegenüberliegende Seitenwangen 63 gegeneinander bewegt werden, so dass der dazwischen angeordnete Führungskasten 55 in seiner Höhenposition festgeklemmt und fixiert wird. Gleichzeitig wird dabei der Führungskasten 55 zusammengepresst und auf dem Mantelrohr 54 verspannt, so dass dieses ebenfalls in seiner Längsposition festgestellt ist.

Der erfindungsgemäße Feedback-Aktuator 5 kann in manuell oder motorisch verstellbaren Eingabeeinheiten wie in Figur 2 oder 3 dargestellt integriert werden. Im Folgenden wird der erfindungsgemäße Aufbau in Figuren 4, 5 und 6 exemplarisch anhand einer motorisch verstellbaren Eingabeeinheit 2 erläutert.

Erfindungsgemäß sind in dem Mantelrohr 54 ein Elektromotor 8 und ein als Planetengetriebe 9 ausgebildetes Getriebe angeordnet. Im gezeigten Beispiel hat das Mantelrohr 54 einen kreisrunden Innenquerschnitt, in den der Elektromotor 8 und das Planetengetriebe 9 integriert sind.

Der Elektromotor 8 hat einen Stator 81, der in einem Motorgehäuse 82 angebracht ist, welches drehfest in dem Mantelrohr 54 befestigt ist. In dem Stator 81 ist ein Rotor 83 mit einer Rotorwelle 84 um die Längsachse 21 in Lagern 85 und 86 drehbar gelagert, d.h. die Rotorwelle 84 erstreckt sich entlang der Längsachse 21. Das Motorgehäuse 82 ist außen bevorzugt rund ausgebildet mit einem Außendurchmesser, der so bemessen ist, dass es in axial in das Mantelrohr 54 einschiebbar ist.

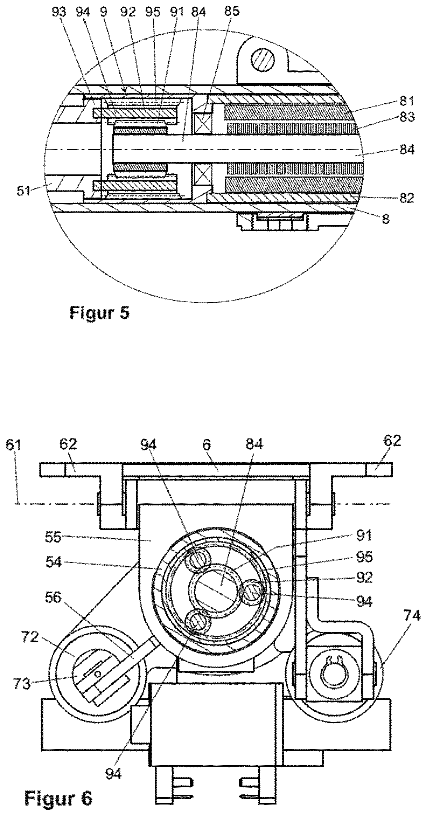

Der erfindungsgemäße Feedback-Aktuator 5 ist im Detail in den Figuren 4 und 5 dargestellt in einem schematischen Längsschnitt entlang der Längsachse 21 der Lenkwelle 51. Figur 6 zeigt einen Querschnitt S im Bereich des Planetengetriebes 9.

Das schematisiert dargestellte Planetengetriebe 9 weist ein Sonnenrad 91 auf, welches drehfest auf der Motorwelle 84 des Elektromotors 8 befestigt ist; die Motorwelle 84 bildet entsprechend die Eingangswelle des Planetengeriebes 9. Damit ist das Planetengetriebe 9 ebenfalls koaxial auf der Längsachse 21 angeordnet. Das Sonnenrad 91 kämmt mit - im dargestellten Beispiel drei - Planetenrädern 92, die an einem Planetenträger 93 jeweils um eine Achse 94 drehbar gelagert sind. Die Planetenräder 92 stehen in Eingriff mit der Innenverzahnung eines Hohlrads 95. Das Hohlrad 95 ist drehfest in dem Mantelrohr 54 befestigt und gibt den Außendurchmesser des Planetengetriebes 9 vor, der so bemessen ist, dass das Planetengetriebe 9 in das Mantelrohr 54 axial eingesetzt werden kann, so dass es zur Bildung einer erfindungsgemäßen Anordnung als Ganzes innerhalb des Mantelrohrs 54 der Manteleinheit angeordnet ist.

Bevorzugt ist innerhalb oder am Mantelrohr 54 ein Sensor 100 vorgesehen, der in der Figur 4 schematisch angedeutet ist. Dieser kann dazu verwendet werden, einen Lenkwinkel, der durch den Fahrer in die Lenkwelle 51 eingetragen wird, zu bestimmen. Weiterhin ist es ebenfalls denkbar und möglich, dass der Sensor 100 als Drehmomentensensor ausgebildet ist, um das durch den Fahrer eingetragene Lenkmoment zu bestimmen. Dafür kann bevorzugt zwischen der Lenkwelle 51 und dem Planetenträger 93 ein nicht dargestellter Drehstab, auch Torsionsstab genannt, angeordnet sein, der mit einem ersten Ende mit der Lenkwelle 51 drehfest gekoppelt ist und mit einem dem ersten Ende gegenüberliegenden zweiten Ende mit dem Planetenträger 93 drehfest gekoppelt ist. Der Drehstab ist torsionsweich, bevorzugt weist die Torsionssteifigkeit einen Wert zwischen 1Nm/° und 4Nm/° auf, so dass dieser durch das eingetragene Lenkmoment verdrillt wird. Die relative Verdrillung zwischen der Lenkwelle 51 und dem Planetenträger 93 kann durch den Sensor 100 ermittelt werden und auf Grund der bekannten Torsionssteifigkeit lässt sich das eingetragene Lenkmoment bestimmen.

Wie aus Figur 4 und 5 erkennbar, ist die Lenkwelle 51 drehmomentschlüssig mit dem Planetenträger 93 verbunden, folglich bildet die Lenkwelle 51 die Ausgangswelle des Planetengetriebes 9.

Der Außendurchmesser, oder bei einer unrunden Ausführung der Außenquerschnitt des Planetengetriebes 9 und des Elektromotors 8 können bevorzugt im Wesentlichen gleich gestaltet sein. Dadurch ist es möglich, das Mantelrohr 54 als Hohlprofil mit einem durchgehenden korrespondierenden Innenquerschnitt auszubilden, in welches das Planetengetriebe 9 und der Elektromotor 8, oder auch eine aus Planetengetriebe 9 und Elektromotor 8 gebildete Baueinheit zur Montage axial eingeschoben und fixiert werden können. Durch Ablängen eines Hohlprofil-Rohlings in der geforderten Länge können je nach Einsatzzweck einfach unterschiedlich lange Mantelrohre 54 hergestellt werden. Es ist ebenfalls denkbar, Elektromotoren 8 und/oder Planetengetriebe 9 mit demselben, in das Hohlprofil passenden Außenquerschnitt, jedoch unterschiedlichen Charakteristiken wie Motordrehmoment, Übersetzungsverhältnis und dergleichen bereitzustellen, so dass ein Baukastensystem zur Verfügung gestellt wird, welches eine effiziente Konstruktion und Fertigung von Feedback-Aktuatoren 5 für unterschiedliche Einsatzzwecke mit geringem Aufwand ermöglicht. Somit ermöglicht die erfindungsgemäße Integration des Planetengetriebes 9 zusammen mit dem Elektromotor 8 in das Mantelrohr 54 eine vergrößerte Gestaltungsfreiheit bei der Auslegung von Steer-by-wire-Lenksystemen.

## Patentansprüche

1. Feedback-Aktuator (5) für eine Lenkeinrichtung (1), umfassend eine Lenkwelle (51), die um ihre Längsachse (21) drehbar in einer Manteleinheit gelagert ist, die ein Mantelrohr (54) aufweist und die an einem Fahrzeug anbringbar ist, und der Feedback-Aktuator (5) eine Aktuatoreinheit mit einem Elektromotor (8) umfasst, der einen mit der Manteleinheit) verbundenen Stator (81) und eine drehend antreibbare Rotorwelle (84) aufweist, die drehmomentschlüssig mit der Lenkwelle (51) verbunden ist, wobei der Elektromotor (8) innerhalb der Manteleinheit (54) angeordnet ist,
wobei die Rotorwelle (84) mit einer Eingangswelle eines Getriebes (9) verbunden ist, das eine mit der Lenkwelle (51) verbundene Ausgangswelle aufweist und welches innerhalb der Manteleinheit angeordnet ist,
**dadurch gekennzeichnet,**
**dass** das Mantelrohr (54) einen gegebenen Innenquerschnitt aufweist, und das Getriebe (9) und der Elektromotor (8) einen Außenquerschnitt haben, mit dem sie in Längsrichtung in den Innenquerschnitt des Mantelrohrs (54) einsetzbar sind.

2. Feedback-Aktuator (5) nach Anspruch 1, **dadurch gekennzeichnet, dass** das Getriebe (9) ein Übersetzungsverhältnis im Bereich von 3:1 bis 25:1hat.

3. Feedback-Aktuator (5) nach Anspruch 1 oder 2, **dadurch gekennzeichnet, dass** die Rotorwelle (84) und/oder die Lenkwelle (51) koaxial zur Längsachse (21) angeordnet ist.

4. Feedback-Aktuator (5) nach einem der vorangehenden Ansprüche, **dadurch gekennzeichnet, dass** das Getriebe (9) als Planetengetriebe ausgebildet ist.

5. Feedback-Aktuator (5) nach einem der vorangehenden Ansprüche, **dadurch gekennzeichnet, dass** die Rotorwelle (84) mit dem Sonnenrad (91) des Planetengetriebes (9) verbunden ist, und die Lenkwelle (51) mit dem Planetenträger (93) des Planetengetriebes (9) verbunden ist.

6. Feedback-Aktuator (5) nach einem der vorangehenden Ansprüche, **dadurch gekennzeichnet, dass** das Getriebe (9) als Wellgetriebe oder Zykloidgetriebe ausgebildet ist.

7. Feedback-Aktuator (5) nach einem der vorangehenden Ansprüche, **dadurch gekennzeichnet, dass** die Manteleinheit ein Mantelrohr (54) aufweist, in dem der Elektromotor (8) und das Getriebe (9) angeordnet sind, und welches in einer Halteeinheit (7, 55) in Richtung der Längsachse (21) teleskopierend verstellbar ist.

8. Feedback-Aktuator (5) nach einem der vorangehenden Ansprüche, **dadurch gekennzeichnet, dass** die Manteleinheit an der Halteeinheit (7) gehaltert ist, die an einem Kraftfahrzeug anbringbar ist, wobei die Manteleinheit relativ zur Halteeinheit (7) quer zur Längsachse (21) verstellbar ist.

9. Feedback-Aktuator (5) nach einem der vorangehenden Ansprüche, **dadurch gekennzeichnet, dass** der Elektromotor (8) als bürstenloser Gleichstrommotor ausgebildet ist.

## Claims

1. Feedback actuator (5) for a steering device (1), comprising a steering shaft (51) which is mounted in a steering column unit such that it can be rotated about its longitudinal axis (21), which steering column unit has a steering column tube (54) and can be attached to a vehicle, and the feedback actuator (5) comprises an actuator unit with an electric motor (8) which has a stator (81) which is connected to the steering column unit and a rotor shaft (84) which can be driven rotationally and is connected in a torque-transmitting manner to the steering shaft (51), the electric motor (8) being arranged within the steering column unit (54), the rotor shaft (84) being connected to an input shaft of a gear mechanism (9) which has an output shaft which is connected to the steering shaft (51), and which gear mechanism (9) is arranged within the steering column unit,
**characterized**
**in that** the steering column tube (54) has a given internal cross section, and the gear mechanism (9) and the electric motor (8) have an external cross section, with which they can be inserted in the longitudinal direction into the internal cross section of the steering column tube (54).

2. Feedback actuator (5) according to Claim 1,
**characterized in that** the gear mechanism (9) has a transmission ratio in the range from 3:1 to 25:1.

3. Feedback actuator (5) according to Claim 1 or 2,
**characterized in that** the rotor shaft (84) and/or the steering shaft (51) are/is arranged coaxially with respect to the longitudinal axis (21).

4. Feedback actuator (5) according to one of the preceding claims, **characterized in that** the gear mechanism (9) is configured as a planetary gear mechanism.

5. Feedback actuator (5) according to one of the preceding claims, **characterized in that** the rotor shaft (84) is connected to the sun gear (91) of the planetary gear mechanism (9), and the steering shaft (51) is connected to the planetary carrier (93) of the planetary gear mechanism (9).

6. Feedback actuator (5) according to one of the preceding claims, **characterized in that** the gear mechanism (9) is configured as a harmonic drive or a cycloid gear mechanism.

7. Feedback actuator (5) according to one of the preceding claims, **characterized in that** the steering column unit has a steering column tube (54), in which the electric motor (8) and the gear mechanism (9) are arranged, and which steering column tube (54) can be adjusted in a holding unit (7, 55) in a telescopic manner in the direction of the longitudinal axis (21).

8. Feedback actuator (5) according to one of the preceding claims, **characterized in that** the steering column unit is secured on the holding unit (7) which can be attached to a motor vehicle, it being possible for the steering column unit to be adjusted relative to the holding unit (7) transversely with respect to the longitudinal axis (21).

9. Feedback actuator (5) according to one of the preceding claims, **characterized in that** the electric motor (8) is configured as a brushless DC motor.

## Revendications

1. Actionneur à rétroaction (5) pour un dispositif de direction (1), comportant un arbre de direction (51) qui est monté de manière à pouvoir tourner autour de son axe longitudinal (21) dans une unité d'enveloppe qui comprend un tube d'enveloppe (54) et qui peut être montée sur un véhicule, et l'actionneur à rétroaction (5) comportant une unité d'actionneur dotée d'un moteur électrique (8) qui comprend un stator (81) relié à l'unité d'enveloppe et un arbre de rotor (84) pouvant être entraîné en rotation, lequel est relié à l'arbre de direction (51) par une liaison de transmission de couple, dans lequel le moteur électrique (8) est disposé à l'intérieur de l'unité d'enveloppe (54),
dans lequel l'arbre de rotor (84) est relié à un arbre d'entrée d'une transmission (9) qui comprend un arbre de sortie relié à l'arbre de direction (51) et qui est disposée à l'intérieur de l'unité d'enveloppe,
**caractérisé en ce que**
le tube d'enveloppe (54) présente une section transversale intérieure donnée, et la transmission (9) et le moteur électrique (8) ont une section transversale extérieure par laquelle ils peuvent être insérés dans la section transversale intérieure du tube d'enveloppe (54) dans la direction longitudinale.

2. Actionneur à rétroaction (5) selon la revendication 1, **caractérisé en ce que** la transmission (9) présente un rapport de transmission dans la plage de 3:1 à 25:1.

3. Actionneur à rétroaction (5) selon la revendication 1 ou 2, **caractérisé en ce que** l'arbre de rotor (84) et/ou l'arbre de direction (51) sont disposés coaxialement à l'axe longitudinal (21).

4. Actionneur à rétroaction (5) selon l'une des revendications précédentes, **caractérisé en ce que** la transmission (9) est réalisée sous forme de transmission planétaire.

5. Actionneur à rétroaction (5) selon l'une des revendications précédentes, **caractérisé en ce que** l'arbre de rotor (84) est relié au pignon planétaire (91) de la transmission planétaire (9), et l'arbre de direction (51) est relié au porte-satellites (93) de la transmission planétaire(9).

6. Actionneur à rétroaction (5) selon l'une des revendications précédentes, **caractérisé en ce que** la transmission (9) est réalisée sous forme de transmission harmonique ou de transmission cycloïdale.

7. Actionneur à rétroaction (5) selon l'une des revendications précédentes, **caractérisé en ce que** l'unité d'enveloppe comprend un tube d'enveloppe (54) dans lequel le moteur électrique (8) et la transmission (9) sont disposés, et lequel est déplaçable de manière télescopique dans une unité de support (7, 55) dans la direction de l'axe longitudinal (21).

8. Actionneur à rétroaction (5) selon l'une des revendications précédentes, **caractérisé en ce que** l'unité d'enveloppe est supportée sur l'unité de support (7) qui peut être montée sur un véhicule automobile, l'unité d'enveloppe étant déplaçable par rapport à l'unité de support (7) transversalement à l'axe longitudinal (21).

9. Actionneur à rétroaction (5) selon l'une des revendications précédentes, **caractérisé en ce que** le moteur électrique (8) est réalisé sous forme de moteur à courant continu sans balais.
